# EUROPÄISCHE PATENTSCHRIFT

(11) **EP 0 836 778 B1**
(45) Veröffentlichungstag und Bekanntmachung des Hinweises auf die Patenterteilung: **10.04.2002**
(21) Anmeldenummer: 96921876.7
(22) Anmeldetag: 01.07.1996
(51) Int. Cl.: H04L 12/46, H04Q 11/04

(54) **VERFAHREN ZUM ERMITTELN EINER ZIEL-ATM-ADRESSE**
PROCESS FOR DETERMINING A TARGET ATM ADDRESS
PROCEDE POUR LA DETERMINATION D'UNE ADRESSE ATM CIBLE

(30) Priorität: 05.07.1995 DE 19524504; 28.09.1995 DE 19536271
(43) Veröffentlichungstag der Anmeldung: 22.04.1998
(73) Patentinhaber: SIEMENS AKTIENGESELLSCHAFT, 80333 München (DE)
(72) Erfinder: KARAPETKOV, Stefan, Santa Clara, CA 95051 (US); FROMM, Ingrid, D-81477 München (DE); PETRI, Bernhard, D-81379 München (DE)
(86) Internationale Anmeldenummer: DE9601170
(87) Internationale Veröffentlichungsnummer: WO9702684

(56) Entgegenhaltungen:
- IEEE COMMUNICATIONS MAGAZINE, Bd. 33, Nr. 5, 1.Mai 1995, Seiten 70-85, XP000518773 HONG LINH TRUONG: "LAN EMULATION ON AN ATM NETWORK"
- IEEE COMMUNICATIONS MAGAZINE, Bd. 32, Nr. 3, 1.März 1994, Seiten 86-98, XP000442191 NEWMAN P: "ATM LOCAL AREA NETWORKS"
- COMMUNICATION FOR GLOBAL USERS, INCLUDING A COMMUNICATIONS THEORY MINI CONFERENCE ORLANDO, DEC. 6 - 9, 1992, Bd. 1 - 2 - 03, 6.Dezember 1992, INSTITUTE OF ELECTRICAL AND ELECTRONICS ENGINEERS, Seiten 1062-1066, XP000357716 CROCETTI P ET AL: "MULTICAST IN SMDS OVER AN ATM NETWORK"

## Beschreibung

Die Erfindung betrifft ein Verfahren zum Ermitteln einer Ziel-ATM-Adresse als Antwort auf eine von einem Ursprungs-LAN-Emulation-Client eines ersten ELAN abgegebene Adreßauflösungsanfrage, wenn die aufzulösende Ziel-MAC-Adresse mindestens einem LAN-Emulation-Client eines zweiten ELAN zugeordnet ist und das erste sowie das zweite ELAN an ein übergeordnetes ATM-Netz angeschlossen sind.

ATM bedeutet hierbei "Asynchronus Transfer Mode", also asynchrones Daten- bzw. Informationsübertragungsverfahren. ELAN meint ein emuliertes LAN, wie es insbesondere beschrieben ist in der Spezifikation 94-0035R9, "LAN Emulation Over ATM: Version 1.0" der LAN Emulation SWG Drafting Group des ATM Forum vom 6. Januar 1995, Editor: Bill Ellington. Hierbei handelt es sich um einen Ansatz des ATM-Forums zur Migration von heutigen LANs zu ATM-Netzen. LAN ist eine Abkürzung von "Local Area Network". Bei LANs handelt es sich um datagrammorientierte Lokalnetze, die u.a. in dem Artikel von David D. Clark, Kenneth D. Progran und David P. Reed, "An Introduction to Local Area Networks" in Proceedings of the IEEE, Vol. 66, No. 11, November 1978 auf den Seiten 1497 bis 1517 beschrieben sind. Außerdem sind LANs in ISO/IEC TR 8802-1, "Overview of LAN-Standards beschrieben. LANs bieten einen verbindungslosen Dienst, den sogenannten MAC-Service, an. MAC steht hierbei für "Media Access Control". Im Gegensatz zu diesem verbindungslosen Dienst ist die ATM-Technologie verbindungsorientiert. Sollen die für LANs entwickelten Protokolle der höheren Schichten in auf der Basis eines ATM-Netzes emulierten LANs benutzt werden, müssen in diesem ATM-Netz die Eigenschaften des verbindungslosen MAC-Dienstes erbracht werden. Die LAN-Emulation gemäß der obengenannten Spezifikation realisiert den MAC-Dienst im lokalen ATM-Netz und definiert damit ein einzelnes emuliertes LAN, im folgenden ELAN genannt. In diesem ELAN können die üblichen LAN-Protokolle wie LLC, TCP/IP, SPX/IPX oder TP/CLNP benutzt werden.

Die LAN-Emulation unterstützt die beiden am häufigsten verwendeten LAN-Standards, nämlich Ethernet gemäß IEEE 802.3 und Token-Ring gemäß IEEE 802.5, wobei bei Token-Ring drei Rahmenlängen unterstützt werden. Die Adressierung jeder LAN-Station erfolgt anhand einer weltweit eindeutigen Ziel-MAC-Adresse. Zur Übertragung von Informationen zwischen LANs werden von einer höheren Schicht übergebenen. Token-Ring-LANs verwenden zur Beschreibung des Informationsweges zusätzlich zu MAC-Adressen sogenannte Route Descriptors im Rahmenkopf. Anhand eines solchen Descriptors kann der Rahmen innerhalb von Token-Ring-LANs zum Ziel befördert werden.

Im folgenden wird nur von MAC-Adressen gesprochen.

Zur Emulation eines LAN in einem ATM-Netz muß die LAN-Emulation u.a. Ziel-MAC-Adressen in Ziel-ATM-Adressen auflösen, Multicast und Broadcast realisieren, also eine Verteilung von Information an mehrere oder an alle Teilnehmer, sowie die Übertragung von LAN-Emulation-Rahmen in der richtigen Reihenfolge sicherstellen. Die LAN-Emulation hat eine Client-Server-Konfiguration. Die Clienten-Seite wird LAN-Emulation-Client LEC genannt und die Server-Seite wird LAN-Emulation-Service genannt. Der LAN-Emulation-Service besteht aus LAN-Emulation-Server LES, Broadcast-and-Unknown-Server BUS und LAN-Emulation-Configration-Server LECS. Der LAN-Emulation-Client bekommt von einer übergeordneten Schicht, beispielsweise der LLC-Schicht, die Ziel-MAC-Adresse und muß die entsprechende ATM-Adresse finden, um daraufhin den Aufbau einer direkte ATM-Verbindung zum Ziel durch Signalisierung zu veranlassen. Die Signalisierung kann hierbei beispielsweise nach der ITU-T-Empfehlung Q.2931/Q.2971 erfolgen. Ein LAN-Emulation-Client kann in der Software oder in der Hardware der Stationen realisiert sein, die an der LAN-Emulation teilnehmen.

Ein LAN-Emulation-Server LES unterhält eine Tabelle mit allen MAC-Adressen, die im emulierten LAN beispielsweise im Rahmen einer Konfigurierung angemeldet sind, und mit den entsprechenden ATM-Adressen. Zwischen den LAN-Emulation-Clienten und dem LAN-Emulation-Server erfolgt die Kommunikation nach einem LAN-Emulation-Adressenauflösungsprotokoll, das entsprechend der englischen Bezeichnung LAN Emulation Address Resolution Protocoll mit LE_ARP bezeichnet wird. Kennt ein LAN-Emulation-Client die Ziel-ATM-Adresse einer Ziel-MAC-Adresse nicht, so sendet er eine Anfrage mit der Ziel-MAC-Adresse an den LAN-Emulation-Server. Eine solche Anfrage zur Adreßauflösung wird mit LE_ARP Request bezeichnet. Falls der LES die Ziel-ATM-Adresse auflösen kann, antwortet er mit LE_ARP Response. Wenn nicht, schickt er die Anfrage an weitere LAN-Emulation-Clienten.

Erhält ein LAN-Emulation-Client eine Adreßauflösungsantwort LE_ARP Response, so baut er zu der hierin enthaltenen ATM-Adresse eine ATM-UBR-Verbindung auf und sendet einen Unicast-Rahmen. UBR bedeutet hierbei "Unspecified Bit Rate", gibt also an, daß die Bitrate nicht festgelegt ist. Ein Unicast-Rahmen ist ein Informations- bzw. Datenpaket mit einem einzigen Adressaten. Bei der Übertragung von Rahmen innerhalb eines ELAN wird zwischen Unicast-Rahmen an einen Empfänger und Multicast- oder Broadcast-Rahmen an mehrere oder alle Empfänger unterschieden. Eine ATM-UBR-Verbindung bleibt ab dem letzten gesendeten Rahmen für 20 Minuten bestehen, damit weitere Rahmen auf einfache Weise zum selben Empfänger geschickt werden können. Hierzu wird auf die Variable C12 in Punkt 5.1.1 der LAN-Emulation-Spezifikation verwiesen. Im LAN-Emulation-Client werden mit Hilfe eines Cash-Mechanismus die Ziel-ATM-Adressen von Ziel-MAC-Adressen eine bestimmte Zeit lang gespeichert. Falls keine Verbindung zu einem Ziel-LAN-Emulation-Client besteht, die Ziel-ATM-Adresse jedoch im Sender-LAN-Emulation-Client bekannt ist, kann ein Sender-LAN-Emulation-Client LEC eine Verbindung ohne Adreßauflösungsanfrage aufbauen und einen Unicast-Rahmen senden.

Multicast-Rahmen an eine Gruppe von Teilnehmern bzw. LAN-Emulation-Clienten und Broadcast-Rahmen an alle Teilnehmer bzw. LAN-Emulation-Client LECen werden an den obengenannten BUS geschickt. Innerhalb eines ELAN unterhält der BUS Verbindungen zu allen LEC die angekommenen Rahmen an die Adressaten.

Jeder LAN-Emulation-Client kann bei der Konfigurierung als sogenannter Proxi-LEC angemeldet werden. Ein Proxi-LAN-Emulation-Client erhält alle Adreßauflösungsanfragen LE_ARP Request, die ein LES nicht auflösen kann. Außerdem erhält ein Proxi-LEC alle Multicast- und alle Broadcast-Rahmen.

Der Vorteil der ATM-Technologie ist u.a. darin zu sehen, daß direkte Verbindungen mit flexibler Bandbreite zwischen den Kommunikationspartnern aufgebaut werden können. Solche direkte Verbindungen garantieren minimale Zeitverzögerungen und eine hohe Informationsübertragungsrate. Dieser Vorteil der ATM-Technologie wird in der LAN-Emulation für Unicast-Rahmen genutzt. In dem Artikel "Interconnect Emulated LANs with White Area ATM Networks" von Peter T.P. Chang und Bill Ellington, ATM Forum Technical Committee vom 29. November - 2. Dezember 1994 sind verschiedene Konzepte bekannt, lokale ATM-Netze, wie z.B. ELANs über ein Weitverkehrs-ATM-Netz zu verbinden. In einem ersten Konzept sind hierbei mehrere ELANs an ein Weitverkehrs-ATM-Netz angeschlossen, wobei die Adreßauflösung und die Datenübertragung über einen einzigen LAN-Emulation-Server und einen einzigen BUS vorgenommen werden. Dieses Konzept führt zu einem enormen Verkehrsaufkommen zur Realisierung der Broadcast-Funktion. Die Adreßauflösungsverzögerungszeiten in einem solchen Netz sind extrem hoch.

Ein weiteres Konzept sieht vor, ELANs jeweils über Fernbrücken (Remote Bridges) an ein Weitverkehrs-ATM-Netz anzuschließen. Hierbei sind entweder alle Fernbrücken über permanente virtuelle Leitungen PVC (Permanent Virtual Circuit) miteinander verbunden oder die Fernbrücken sind unter Verwendung eines Adreßauflösungs-Servers mit Hilfe einer ATM-Signalisierung dynamisch miteinander verbunden. Hierbei sind die Übertragungsmöglichkeiten durch die Übertragungsmöglichkeiten der Fernsteuerbrücken und die Bandbreite der permanenten virtuellen Leitungen zwischen zwei Fernsteuerbrücken beschränkt. Die Fernbrücken werden mit Broadcast-Rahmen von Broadcast and Unknown Servern ferner ELANs überflutet, sofern deren Fernbrücke jeweils nicht die Adresse der den Ziel-MAC-Adressen zugeordneten Fernbrücken kennt.

Ein weiteres Konzept sieht vor, anstelle der Fernbrücken Brouter vorzusehen, eine Mischung aus Brücke und Rrouter. Diese Brouter erfüllen in diesem Fall auf der ELAN-Seite die Funktion einer LAN-Emulations-Brücke und auf der Seite des ATM-Weitverkehrsnetzes die Funktionen eines Routers. Dadurch werden die Broadcast-Probleme reduziert, eine Beschränkung der Übertragungsmöglichkeiten über das ATM-Weitbereichsnetz durch die Übertragungsmöglichkeiten der Brouter und der permanenten virtuellen Leitungen bleibt jedoch bestehen.

Ein weiteres Konzept sieht vor, die LAN-Emulation-Server der einzelnen ELANs sowie die BUS der einzelnen ELANs miteinander durch Direktverbindungen zu verbinden. Dies führt jedoch zu einer großen Anzahl von Direktverbindungen und zu einem hohen Verkehrsaufkommen zwischen den LAN-Emulation-Servern und den BUS der einzelnen ELANs. Das Verkehrsaufkommen steigt hierbei linear mit der Anzahl der verbundenen ELANs.
Ein weiteres Konzept sieht vor, die LAN-Emulation-Server der einzelnen ELANs sowie die BUS der einzelnen ELANs über Direktverbindungen an einen übergeordneten LAN-Emulation-Server bzw. einen übergeordneten BUS zu verbinden. Dies führt jedoch ebenfalls zu einer großen Anzahl von Direktverbindungen und zu einem hohen Verkehrsaufkommen. Die Mehrschichtigkeit von BUS und übergeordnetem BUS bzw. LES und übergeordnetem LES führt außerdem zu Zeitverzögerungen.

Aus "ATM Local Area Networks", IEEE Communications Magazine, März 1994, No.3, Seiten 86-98 ist eine Anordnung mit einem zwei lokale Netzwerke verbindenden Weitverkehrsnetz bekannt. Durch eine Übergangsfunktion wird jedes einzelne Datenpaket aus einem lokalen Urspungs-Netzwerk entsprechend einem für das Weitverkehrsnetz spezifischen Übergangsprotokoll eingekapselt. An einem Übergang zwischen dem Weitverkehrsnetz und einem lokalen Ziel-Netzwerk werden die ursprünglichen Datenpakete wieder entkapselt.

Aufgabe der Erfindung ist das Bereitstellen eines Verfahrens zum Ermitteln einer Ziel-ATM-Adresse als Antwort auf eine von einem Ursprungs-LEC eines ersten ELAN abgegebenen Adreßauflösungsanfrage, wenn die aufzulösenden Ziel-MAC-Adresse mindestens einem LAN-Emulation-Client eines zweiten ELAN zugeordnet ist und das erste sowie das zweite ELAN zur Realisierung von ATM-Direktverbindungen zwischen LAN-Emulation-Clienten unterschieldicher ELANs an ein übergeordnetes ATM-Netz angeschlossen sind.

Diese Aufgabe löst die Erfindung durch ein Verfahren mit den Merkmalen des Anspruchs 1. Günstige Ausgestaltungen der Erfindung sind Gegenstand von Unteransprüchen.

Wenn innerhalb eines ELAN Informationen von einem LAN-Emulation-Client zu einem anderen LAN-Emulation-Client übertragen werden soll, veranlaßt der Ursprungs-LEC üblicherweise einen AMT-Verbindungsaufbau zu dem Ziel-LEC. Hierzu ist die Ziel-ATM-Adresse erforderlich. Der Ursprungs-LEC kennt von höheren Schichten eine Ziel-MAC-Adresse. Außerdem kann in seinem Speicher zu der Ziel-MAC-Adresse eine Ziel-ATM-Adresse abgelegt sein. Falls keine Ziel-ATM-Adresse abgelegt ist, gibt der Ursprungs-LEC normgemäß an einen LAN-Emulation-Server des ELAN eine Adreßauflösungsanfrage LE_ARP_Request. Wenn der der Ziel-MAC-Adresse zugeordnete Client nicht zu dem ELAN dieses LAN-Emulation-Server gehört, kann dieser LAN-Emulation-Server die ATM-Adresse nicht auflösen, die Adreßauflösungsanfrage also nicht beantworten.

Erfindungsgemäß sind das erste und das zweite ELAN an ein einen verbindungslosen Dienst wie z.B. SMDS (Switched Multimegabit Data Service) oder CBDS (Connectionless Broadband Data Service) bereitstellendes Weitverkehrsnetz (regional und/oder global) angeschlossen. Der Einfachheit halber wird im Folgenden und in den Patentansprüchen, sofern keine anderslautenden Erläuterungen vorgenommen werden unter Weitverkehrsnetz immer ein einen verbindungslosen Dienst bereitstellendes Weitverkehrsnetz - also ein CLS-Weitverkehrsnetz (regional und/oder global) - gemeint.

Ist die aufzulösende Ziel-MAC-Adresse mindestens einem LAN-Emulation-Client eines zweiten ELAN zugeordnet, so wird erfindungsgemäß die Ziel-ATM-Adresse mit den folgenden Verfahrensschritten aufgelöst:
- Einkapseln der im ersten ELAN als ELAN-Rahmen vorliegenden Adreßauflösungsanfrage in ein Rahmenformat des CLS-Weitverkehrsnetzes mit einer der Ziel-MAC-Adresse zugeordneten E-164-Adresse im Rahmen-Kopfteil;
- Übergeben dieser eingekapselten Adreßauflösungsanfrage an das CLS-Weitverkehrsnetz und Übertragung zum zweiten ELAN;
- Entkapseln der eingekapselten Adreßauflösungsanfrage und Übergeben an einen LAN-Emulation-Server des zweiten ELAN im ELAN-Rahmenformat;
- Auflösen der Ziel-MAC-Adresse in eine zugehörige ATM-Adresse durch diesen Server des zweiten ELAN und Ausgabe einer Adreßauflösungsantwort;
- Einkapseln dieser Adreßauflösungsantwort in das Rahmenformat des CLS-Weitverkehrsnetzes und Übertragen zum ersten ELAN;
- Entkapseln der eingekapselten Adreßauflösungsantwort und Übergeben an den Ursprungs-LECen.

Ist der Ziel-MAC-Adresse ein einziger Ziel-LEC zugeordnet, also die Übertragung von Unicast-Rahmen beabsichtigt, so wird gemäß der oben erwähnten 'LAN-Emulation over ATM-Specification' vom Ursprungs-LEC eine Adreßauflösungsanfrage an den LAN-Emulation-Server des lokalen ELAN gesendet. Da der LAN-Emulation-Server nur die lokalen ATM-Adressen kennt, kann er die Ziel-ATM-Adresse nicht auflösen. Der lokale LAN-Emulation-Server gibt daher die Adreßauflösungsanfrage des Ursprungs-LEC an alle im lokalen ELAN angemeldeten Proxi-LEC ab. In einer günstigen Ausgestaltung der Erfindung sind daher die einzelnen ELANs jeweils über einen speziellen LAN-Emulation-Client an das einen verbindungslosen Dienst bereitstellende Weitverkehrsnetz angeschlossen. Dieser Zugangs-LEC ist jeweils vorzugsweise als Proxi-LEC in seinem ELAN angemeldet.

Ist die aufzulösende Ziel-MAC-Adresse mindestens einem LAN-Emulation-Client eines zweiten ELAN zugeordnet, so wird die Adreßauflösungsanfrage erfindungsgemäß über das einen verbindungslosen Dienst bereitstellende Weitverkehrsnetz an das zweite und ggf. weitere ferne ELANs übertragen.

Sind die einzelnen ELANs jeweils über einen Zugangs-LEC an das einen verbindungslosen Dienst bereitstellende Netz angeschlossen, so wird der Übergang zwischen einem ELAN und dem Weitverkehrsnetz vorzugsweise durch eine Übergangsfunktion IWF (Inter Working Function) gebildet, die zwischen dem CLS-Weitverkehrsnetz (T-Referenzpunkt) und einem Zugangs-LEC des jeweiligen ELAN angeordnet ist. Eine solche Übergangsfunktion kann eine Brücke (Bridge) oder ein Router sein.

Eine Brücke als Übergangsfunktion hat beispielsweise einen Adress-Speicher für einander zugeordnete MAC-Adressen des ELAN und E.164-Adressen des CLS-Weitverkehrsnetzes und einen Speicher für eine dem Übergang vom CLS-Weitverkehrsnetz zur Brücke zugeordnete E.164-Adresse.

Eine einfache Ausführungsform einer solchen Brücke kann vorsehen, daß Adfreßauflösungsanfrage-Rahmen und Unicastsowie Multicast-Daten-Rahmen verworfen werden, falls zu ihrer Ziel-MAC-Adresse im Adress-Speicher keine zugeordnete E.164-Adresse gespeichert ist, daß Adreßauflösungsanfrage-Rahmen und Unicast- sowie Multicast-Daten-Rahmen an das CLS-Weitverkehrsnetz weitergeleitet werden, falls zu ihrer Ziel-MAC-Adresse im Adreß-Speicher eine zugeordnete E.164-Adresse gespeichert ist, und daß Datenrahmen und Adreßauflösungsanfrage-Rahmen, deren Ziel-MAC-Adresse eine lokale Broadcast-MAC-Adresse ist, verworfen werden. Die Umsetzungsfunktion übergibt jeweils gemeinsam mit dem Rahmen die der Ziel-MAC-Adresse zugehörige E.164-Adresse an die Schnittstelle zum CLS-Weitverkehrsnetz. Zumindest zu Adreßauflösungsanfrage-Rahmen übergibt die Umsetzungsfunktion auch die der Ursprungs-MAC-Adresse zugeordnete E.164-Adresse.
Vom CLS-Weitverkehrsnetz kommende Rahmen werden an die Schnittstelle (Schicht LEC) zum ELAN übergeben.

Eine solche Umsetzungsfunktion sieht vor, daß nur Adreßauflösungsanfragen für solche MAC-Adressen aufgelöst werden können, die gemeinsam mit der zugeordneten E.164-Adresse im Adresspeicher abgelegt sind. Dadurch gelangen nur sicher aufzulösende Adreßauflösungsanfragen in das einen verbindungslosen Dienst bereitstellende Weitverkehrsnetz.

Sollten auch Adreßauflösungsanfragen für solche MAC-Adressen aufgelöst werden können, deren zugeordnete E.164-Adressen nicht im Adresspeicher abgelegt sind, so kann die genannte Umsetzungsfunktion ausgestaltet sein, um Adreßauflösungsanfrage-Rahmen, zu deren Ziel-MAC-Adresse im Adress-Speicher keine zugeordnete E.164-Adresse gespeichert ist, mit einer allen ELANs zugeordneten globalen E.164-Gruppenadresse an das CLS-Weitverkehrsnetz weiterzuleiten. Eine solche Adreßauflösungsanfrage wird dann, beispielsweise vom Gruppenadressen-Agenten GAA des CLS-Weitverkehrsnetzes gesteuert, an alle ELANs geschickt. Da die Adreßauflösungsanfrage-Rahmen klein sind, wird durch diese Maßnahme das CLS-Weitverkehrsnetz nur relativ gering belastet.

Insbesondere um das Versenden von Unicast-Datenrahmen im CLS-Weitverkehrsnetz zu verhindern, deren ATM-Adresse dem Ursprungs-LEC beim Absenden nicht bekannt war und die daher über den Broadcast-and-Unknown-Server als Unknown-Datenrahmen zum Zugangs-LEC gelangen, kann in einer Abwandlung der beschriebenen Umsetzungsfunktion vorgesehen sein, alle Unicast-Datenrahmen zu verwerfen. Da der solchen Unicast-Datenrahmen ohne ATM-Adresse zugeordnete Adreßauflösungsanfrage-Rahmen über das CLS-Weitverkehrsnetz übertragen wird, erhält der Ursprungs-LEC die für einen ATM-Verbindungsaufbau erforderliche ATM-Adresse und kann den Verbindungsaufbau veranlassen. Wenn von einem Sicherungsmechanismus einer höheren Schicht festgestellt wird, daß eine fehlerhafte Übertragung zumindest der Unkwown-Datenrahmen vorliegt, kann eine wiederholte Übertragung über das ATM-Netz erfolgen.

Eine beschriebene Umsetzungsfunktion kann vorzugsweise ausgestaltet sein, um Datenrahmen und Adreßauflösungsanfrage-Rahmen an das CLS-Weitverkehrsnetz weiterzuleiten, deren Ziel-MAC-Adresse eine globale Broadcast-MAC-Adresse ist. Die hierzu zugeordnete E.164-Adresse entspricht der oben erwähnten, alle angeschlossenen ELANs adressierenden E.164-Adresse. Durch diese Maßnahme ist es möglich, gezielt Broadcast-Rahmen über das CLS-Weitverkehrsnetz zu übertragen, obwohl lokale Broadcast-Rahmen verworfen werden.

Vorzugsweise ist bei beschriebenen Umsetzungsfunktionen vorgesehen, jeweils die dem Sender von vom CLS-Weitverkehrsnetz kommenden Rahmen zugeordnete MAC-Adresse sowie die dieser zugeordnete E.164-Adresse im Adreß-Speicher zu speichern. Dadurch wird das gezielte Übertragen von Daten - beispielsweise einer Adreßauflösungs-Antwort - vom Empfänger einer Information - beispielsweise einer Adreßauflösungsanfrage - zum Sender dieser Information über das einen verbindungslosen Dienst bereitstellende Weitverkehrsnetz erleichtert.

Nachfolgend wird die Erfindung an Hand besonderer Ausgestaltungen unter Bezugnahme auf die Figuren näher erläutert:
- Fig. 1: zeigt die Übertragung von LE_ARP Request/Response durch das CLS-Netz und ATM-Verbindungsaufbau vom Sender zum Empfänger.
- Fig. 2: zeigt die Übertragung von SETUP bzw. ADD_PARTY Signalisierungsnachricht mit LE_ARP Request und ATM-Verbindungsaufbau vom Empfänger zum Sender.
- Fig. 3: zeigt die Auflösung der Multicast/Broadcast-Ziel-MAC-Adresse durch das CLS-Netz und Aufbau von Punkt-zu-Punkt oder Punkt-zu-Mehrpunkt ATM-Verbindungen vom Sender zu allen Empfängern.
- Fig. 4: zeigt die Übertragung der SETUP bzw. ADD_PARTY Signalisierungs-nachricht mit LE_ARP Request für Multicast/Broadcast-MAC-Adresse und Aufbau von Punkt-zuPunkt/Punkt-zu-Mehrpunkt ATM-Verbindungen von allen Empfängern zum Sender.
- Fig. 5A bis 5C: zeigen jeweils einen Protokollstack bei Kopplung von ELANs durch SMDS-Netz bzw CBDS-Netz.

Der Connectionless Service oder CLS-Dienst kann mit verschiedenen Technologien (z.B. DQDB, ATM, FR) realisiert werden. Der Dienst wird in der ITU-T Empfehlung F.812 beschrieben.

Bekannte Realisierungen sind der Switched Multi-megabit Data Service (SMDS), beschrieben in Spezifikationen von Bellcore, SMDS Interest Group (SIG) und European SMDS Interest Group (ESIG), sowie der Connectionless Broadband Data Service (CBDS), definiert in ETSI Standard 300 217 und ITU-T Empfehlung I.364.

Durch diese Realisierungen fand der CLS weltweit große Verbreitung. Anlagen, die diesen Dienst anbieten, werden von vielen Herstellern im Bereich der Telekommunikation gebaut.

Der Dienst ist für weltweite Datenkommunikation gedacht. Dabei werden jedem Zugang zum CLS-Netz eine oder mehrere CLNAP-Adressen nach E.164 (E.164-Adresse) zugeteilt (CLNAP=Connectionless Network Access Protocol).

Einem ankommenden Unicast-Rahmen wird anhand seiner Ziel-MAC-Adresse durch statische oder dynamische Zuordnungstabellen eine Ziel-CLNAP-Adresse ( E.164-Adresse) zugefügt (Einkapseln) und der eingekapselte Rahmen (auch CLS-Paket genannt) wird zu dieser CLNAP-Adresse geleitet.

Zum besseren Verständnis werden im folgenden die Adressen im ELAN Unicast- bzw. Multicast/Broadcast-MAC-Adressen genannt, im CLS-Netz wird dagegen von individuellen und Gruppenadressen gesprochen.

Jedes CLS-Paket wird im CLS-Netz unabhängig von den anderen übertragen. Das Netz sorgt für die richtige Reihenfolge der CLS-Pakete.

Innerhalb des CLS-Netzes werden unter bestimmten Voraussetzungen (siehe prETS 300 478, 300 479) die CLNAP-PDUs in CLNIP-PDUs (CLNIP = Connectionless Network Interface Protocol) eingekapselt.

Die Behandlung von Multicast-Verkehr wird im CLS-Netz in folgender Weise realisiert. Sogenannte Group Address Agents (GAAs) enthalten Tabellen mit den individuellen CLNAP-Adressen, die zu einer CLNAP-Gruppenadresse gehören.
Jedes CLS-Paket, das eine Gruppenadresse als Zieladresse hat, wird zum entsprechenden Group Address Agent geleitet. Falls eingekapselt wurde, steht in den Feldern "CLNAP Destination Address" und "CLNIP Destination Address" die gleiche Gruppenadresse.

Der GAA löst die Gruppenadresse des angekommenen CLS-Pakets in individuelle CLNIP-Adressen auf, erzeugt Kopien des ursprünglichen Pakets und fügt jeder Kopie die entsprechende individuelle Adresse als CLNIP-Adresse hinzu.

Das "CLNAP Destination Address" Feld bleibt unverändert, damit der Empfänger die ursprüngliche Gruppenadresse erfahren kann. Die LAN-Emulation beschreibt ein einzelnes emuliertes LAN. Für die Kopplung von ELANs sind zur Zeit keine Lösungen bekannt. Aus Leistungsgründen können die in der LAN-Emulation beschriebenen Mechanismen zur Adressenauflösung und zur Realisierung von Multicast/Broadcast im WAN Bereich nicht einfach übernommen werden.

Nachstehend werden Methoden zur Kopplung von ELANs unter Anwendung der Erfindung beschrieben:

Ein erstes Beispiel sieht die Übertragung von Adreßauflösungsanfragen bzw. Adreßauflösungsantworten LE_ARP Request/Response durch ein einen verbindungslosen Dienst bereitstellendes Netz und danach einen ATM-Verbindungsaufbau vom Sender zum Empfänger vor.

Ein Vorteil der LAN-Emulation ist der Aufbau einer direkten ATM-Verbindung zwischen Sender und Empfänger, wie er in der LAN-Emulation Specification mit "Data Direct VCC" bezeichnet wird. Deshalb schlägt die Weiterbildung der Erfindung dieses Beispiels vor, die Ziel-MAC-Adresse für den Unicast-Verkehr unter Verwendung eines einen verbindungslosen Dienst bereitstellenden Netzes wie z.B. SMDS oder CBDS in die ATM-Adresse aufzulösen und dann eine direkte ATM-Verbindung zum Ziel aufzubauen.

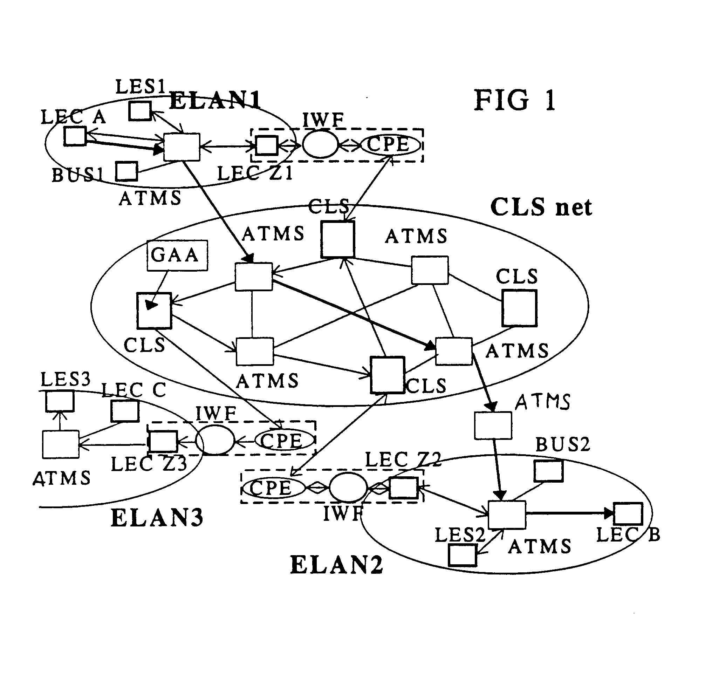

Die Figuren 1, 2, 3 und 4 zeigen in gleicher Weise drei ELANs ELAN1, ELAN2 und ELAN3, jeweils mit einem LAN-Emulation-Server LES, einer ATM-Vermittlungseinrichtung ATMS, einem LAN-Emulation-Client LEC A, LEC B, LEC und einem speziellen LAN-Emulation-Client LEC Z1, LEC Z2, LEC Z3, der nachstehend als Zugangs-LEC bezeichnet wird und der dem jeweiligen ELAN ELAN1, ELAN2 bzw. ELAN3 über eine Kundenanschlußeinheit CPE (Customer Premises Equipment) Zugang zu einem ebenfalls dargestellten, einen verbindungslosen Dienst bereitstellenden Netz CLSnet ermöglicht. Hierbei ist jeder Kundenanschlußeinheit CPE eine Übergangsfunktion (Interworking Function IWF) zugeordnet zum Umsetzen einer Ziel-MAC-Adresse in eine E.164-Adresse der Kundenanschlußeinrichtung CPE des ELAN, in dem der LAN-Emulation-Client sich befindet, dem die Ziel-MAC-Adresse zugeordnet ist, oder zum Umsetzen einer E.164-Gruppenadresse aller ELANs. In den Ausführungsbeispielen gemäß den Figuren 1, 2, 3 und 4 ist das einen verbindungslosen Dienst bereitstellende Netz CLSnet mit Hilfe eines (regionalen oder globalen) ATM-Netzes mit ATM-Vermittlungseinrichtungen ATMS realisiert. Die Realisierungsart des einen verbindungslosen Dienst bereitstellenden Netzes CLSnet hat jedoch keinen Einfluß auf die Erfindung.

In den Figuren 1, 2, 3 und 4 sind außerdem jeweils der Broadcast-and-Unknown-Server BUS1, BUS2, BUS3 des ELAN1, ELAN2 und ELAN3 dargestellt.

Das einen verbindungslosen Dienst bereitstellende Netz CLSnet enthält einen verbindungslosen Dienst bereitstellende Server (Connectionless Server) CLS und einen Gruppenadreßagenten GAA (Group Address Agent).

In Fig. 1 sind die Signalflüsse der im Rahmen des LAN-Emulation-Adreßauflösungsprotokolls LE_ARP (LAN Emulation Address Resolution Protocol) übermittelten Adreßauflösungsanfragen LE_ARP Request und Adreßauflösungsantwortwort LE_ARP Response durch eine dünne Linie mit Pfeil in Signalflußrichtung angedeutet. Der Signalfluß von Daten vom LAN-Emulation-Client LEC A zum LAN-Emulation-Client LEC B über eine ATM-Verbindung ist in Fig. 1 durch eine fette Linie mit Pfeil in Signalflußrichtung angedeutet.

Demnach ist in Fig. 1 zu erkennen, daß eine Adreßauflösungsanfrage LE_ARP Request vom LAN-Emulation-Client LEC A des ELAN1 über die ATM-Vermittlungseinrichtung ATMS dieses ELAN1 an den LAN-Emulation-Server des ELAN1 und von dort über die ATM-Vermittlungseinrichtung ATMS an den Zugangs-LEC LEC Z1 übertragen wird. Vom Zugangs-LEC LEC Z1 geht die Adreßauflösungsanfrage LE_ARP Request unter Einbeziehung der Umsetzungsfunktion IWF zur Kundenanschlußeinrichtung CPE, wird dort in eine andere Form umgesetzt und über einen verbindungslosen Server CLS, eine ATM-Vermittlungseinrichtung ATMS und einen weiteren verbindungslosen Server CLS zum Gruppenadressenagenten GAA übertragen und von dort unmittelbar an die Kundenanschlußeinrichtung CPE des ELAN3 sowie über eine weitere ATM-Vermittlungseinrichtung ATMS und einen weiteren verbindungslosen Server CLS an die Kundenanschlußeinrichtung CPE des ELAN2 übermittelt. Dann wird die Adreßauflösungsanfrage LE_ARP Request in jedem der ELANs ELAN2 und ELAN3 über eine IWF und einen Zugangs-LEC LEC Z2, LEC Z3 und über die ATM-Vermittlungseinrichtung ATMS des jeweiligen ELAN an den LAN-Emulation-Server LES2, LES3 des ELAN übertragen. Der LAN-Emulation-Server LES2 des ELAN2 kann die Ziel-MAC-Adresse in die ATM-Adresse auflösen und über die ATM-Vermittlungseinrichtung ATMS, den Zugangs-LEC LEC Z2, die Kundenanschlußeinrichtung CPE des ELAN2, zwei verbindungslose Server CLS des einen verbindungslosen Dienst bereitstellenden Netzes CLSnet, die Kundenanschlußeinrichtung CPE des ELAN1, den Zugangs-LEC LEC Z1 des ELAN1 und die ATM-Vermittlungseinrichtung ATMS des ELAN1 an den LAN-Emulation-Clienten LEC A übermitteln. Wie durch einen übergreifenden Rahmen dargestellt, bilden in dem dargestellten Beispiel jeweils Zugangs-LEC, Umsetzungsfunktion IWF und Kundenanschlußeinrichtung CPE eine Brücke, deren Brückenfunktion die Umsetzungsfunktion IWF ist.

Wenn der LAN-Emulation-Client LEC A die Ziel-ATM-Adresse kennt, kann er über ein durch eine Vielzahl von ATM-Vermittlungseinrichtungen ATMS in Fig. 1 dargestelltes ATM-Netz eine direkte Verbindung zum Ziel-LAN-Emulation-Clienten LEC B im ELAN2 aufbauen, wie sie durch fette Linien zwischen dem LAN-Emulation-Clienten LEC A und dem LAN-Emulation-Clienten LEC B sowie dazwischengeschalteten ATM-Vermittlungseinrichtungen ATMS in Figur 1 dargestellt ist.

Nachstehend wird dieser Ablauf detaillierter beschrieben.

Ein LAN-Emulation-Client LEC Z1, LEC Z2 bzw. LEC Z3 jedes emulierten LAN ELAN1, ELAN2, ELAN3 hat Zugang (CPE) zum einen verbindungslosen Dienst bereitstellenden Netz CLSnet. Falls der LAN-Emulation-Client LEC A des ELAN1 einen Unicast-Rahmen an den LAN-Emulation-Clienten LEC B des ELAN2 senden möchte, jedoch die Ziel-ATM-Adresse nicht kennt, schickt er eine Adreßauflösungsanfrage LE_ARP Request an den LAN-Emulation-Server LES des ELAN1. Wenn der LAN-Emulation-Server LES des ELAN1 keinen Eintrag für die Ziel-MAC-Adresse in seiner Tabelle hat, muß er diese Adreßauflösungsanfrage LE_ARP Request an den Zugangs-LEC LEC Z1 des ELAN1 weitergeben. Dies kann beispielsweise durch Anmeldung des Zugangs-LEC LEC Z1 als Proxy beim LAN-Emulation-Server LES des ELAN1 realisiert sein.

Der Zugangs-LEC LEC Z1 des ELAN1 ist wie die übrigen Zugangs-LECs LEC Z2, LEC Z3 der anderen emulierten ELANs ELAN2 und ELAN3 jeweils an eine Kundenanschlußeinrichtung CPE eines einen verbindungslosen Dienst bereitstellenden Netzes CLSnet angeschlossen. Der Übergang vom Zugangs-LEC LEC Z1, LEC Z2, LEC Z3 zum einen verbindungslosen Dienst bereitstellenden Netz CLSnet wird hierbei mit Hilfe einer oben erwähnten und weiter unten detaillierter beschriebenen Übergangsfunktion IWF (Interworking Function) realisiert, die jede zu einem Zugangs-LEC LEC Z1, LEC Z2, LEC Z3 ankommende Adreßauflösungsanfrage LE_ARP Request bzw. Adreßauflösungsantwort LE_ARP Response, für die sie einen Eintrag (E.164-Adresse) für die Ziel-MAC-Adresse hat, in das Format eines Paketes des einen verbindungslosen Dienst bereitstellenden Netzes CLSnet (CLNAP-Paket) transformiert und diese Anfrage bzw. Antwort an das einen verbindungslosen Dienst bereitstellende Netz CLSnet übergibt.

Falls die Übergangsfunktion keinen Eintrag hat, kann sie entweder den entsprechenden Adreßauflösungsanfragerahmen bzw. Adreßauflösungsantwortrahmen verwerfen oder diesen Rahmen mit einer E.164-Gruppenadresse versehen, durch die alle emulierten LANs erreichbar sind, die einen Zugang zum einen verbindungslosen Dienst bereitstellenden Netz CLSnet haben. Im letztgenannten Fall löst ein Gruppenadressenagent GAA (Group Address Agent) diese Gruppenadresse in die individuellen E.164-Adressen der einzelnen Kundenanschlußeinrichtungen CPE der einzelnen ELANs ELAN1, ELAN2, ELAN3 auf.

Hierbei ist es besonders günstig, wenn die E.164-Gruppenadresse, die von einer Übergangsfunktion zu einer Adreßauflösungsanfrage bzw. Adreßauflösungsantwort hinzugefügt wird jeweils die E.164-Adressen der Kundenanschlußeinrichtungen CPE aller emulierten LANs ELAN2, ELAN3 enthält, die an das einen verbindungslosen Dienst bereitstellende Netz CLSnet angeschlossen sind mit Ausnahme der E.164-Adresse der Kundenanschlußeinrichtung des eigenen ELAN ELAN1.

Der Gruppenadressenagent GAA löst die E.164-Gruppenadresse auf und schickt Kopien des Paketes mit der Adreßauflösungsanfrage LE_ARP Request an die genannte Gruppe der Kundenanschlußeinrichtungen CPE der einzelnen ELANS ELAN2, ELAN3. Dadurch erhalten alle Zugangs-LECs LEC Z2, LEC Z3 die Adreßauflösungsanfrage LE_ARP Request über die Übergangsfunktion. Jeder Zugangs-LEC LEC Z2, LEC Z3 erkennt den Rahmentyp als Adreßauflösungsanfrage und schickt den Rahmen daher an den LAN-Emulation-Server LES seines emulierten LAN ELAN2 bzw. ELAN3. Üblicherweise kann irgendein LAN-Emulation-Server LES die Unicast-Ziel-MAC-Adresse des Ziel-LAN-Emulation-Clienten LEC B in die ATM-Adresse auflösen.

Das Zurücksenden einer Adreßauflösungsantwort wird dann besonders günstig gestaltet, wenn der Adreßauflösungsanfrage LE_ARP Request beim Einkapseln durch die Übergangsfunktion die E.164-Adresse der Kundenanschlußeinrichtung CPE des Ausgangs-ELAN ELAN1 hinzugefügt wird, wenn beim Entkapseln der Adreßauflösungsanfrage in der Kundenzugangseinrichtung CPE des ELAN2 die Ausgangs-E.164-Adresse der Adreßauflösungsanfrage gespeichert wird und diese Ausgangs-E.164-Adresse beim Einkapseln der vom LAN-Emulation-Server LES des ELAN2 über den Zugangs-LEC LEC Z2 an die Kundenanschlußeinrichtung CPE des ELAN2 übergebenen Adreßauflösungsantwort dem Kopfteil des über das einen verbindungslosen Dienst bereitstellende Netz CLSnet zu übertragenden Paketes hinzugefügt wird. Dadurch wird eine unmittelbare Übertragung der Adreßauflösungsantwort LE_ARP Response in eingekapselter Form durch das einen verbindungslosen Dienst bereitstellende Netz CLSnet zur Kundenanschlußeinrichtung CPE des ELAN1 ermöglicht.

Der Zugangs-LEC LEC Z1 im Ausgangs-ELAN ELAN1 leitet die Adreßauflösungsantwort LE_ARP Response, nachdem diese durch die Übergangsfunktion entkapselt worden ist, zum Ausgangs-LEC LEC A weiter. Nachdem der Ausgangs-LEC LEC A die Adreßauflösungsantwort LE_ARP Response mit der Ziel-ATM-Adresse erhalten hat, baut er eine unmittelbare ATM-Verbindung zum Ziel-LEC LEC B über ein regionales bzw. globales ATM-Netz auf.

Zur Realisierung des beschriebenen Verfahrens zum Koppeln von ELANs sind in der bestehenden LAN-Emulation Specification keine Änderungen erforderlich. Es muß lediglich jeweils ein Zugangs-LEC als Proxy beim LAN-Emulation-Server LES angemeldet werden und über eine Kundenanschlußeinrichtung CPE an ein einen verbindungslosen Dienst bereitstellendes Netz CLSnet angeschlossen sein. Dieser Zugangs-LEC erhält dann alle unbeantworteten Adreßauflösungsanfragen LE_ARP Request von dem LAN-Emulation-Server LES des entsprechenden emulierten LANs ELAN1, ELAN2, ELAN3.

Auch die bestehenden einen verbindungslosen Dienst bereitstellenden Netze wie z.B. SMDS oder CBDS müssen weder in ihren Standards noch in ihren Spezifikationen geändert werden. Es muß lediglich innerhalb dieses Netzes eine E.164-Gruppenadresse mit allen individuellen CPE-Adressen definiert werden, durch die emulierten LANs erreicht werden können. Hierbei kann ggf. ein Mechanismus vorgesehen sein, der eine Adressierung der sendenden Kundenanschlußeinheit CPE ausschließt.

Ein zweites Beispiel sieht die Übertragung einer einen Verbindungsaufbau anfordernden Meldung wie zum Beispiel eine SETUP- oder ADD_PARTY-Signalisierungsnachricht gemeinsam mit der Adreßauflösungsanfrage LE_ARP Request vor und das unmittelbare Veranlassen eines Verbindungsaufbaus einer ATM-Verbindung zwischen Empfänger und Sender durch den Empfänger.

Diese Methode ist eine Erweiterung der zuvor beschriebenen Methode. Eine Beschleunigung des Verbindungaufbaus zwischen Sender und Empfänger kann erreicht werden, wenn die SETUP bzw. ADD_PARTY Signalisierungsnachricht mit dem LE_ARP Request mitgesendet wird. Dadurch kann der Empfänger gleich nach der Ankunft der Adreßauflösungsanfrage LE_ARP Requests den Aufbau einer ATM-Verbindung zum Sender durch CALL_SETUP invoke bzw. CALL_ADD_PARTY invoke (siehe Punkt 3.3.2 in der LAN Emulation Specification) an die Signalisierungseinheit veranlassen. Signalisierungseinheit ist hierbei die in der LAN Emulation Specification mit Connection Management bezeichnete Einheit.

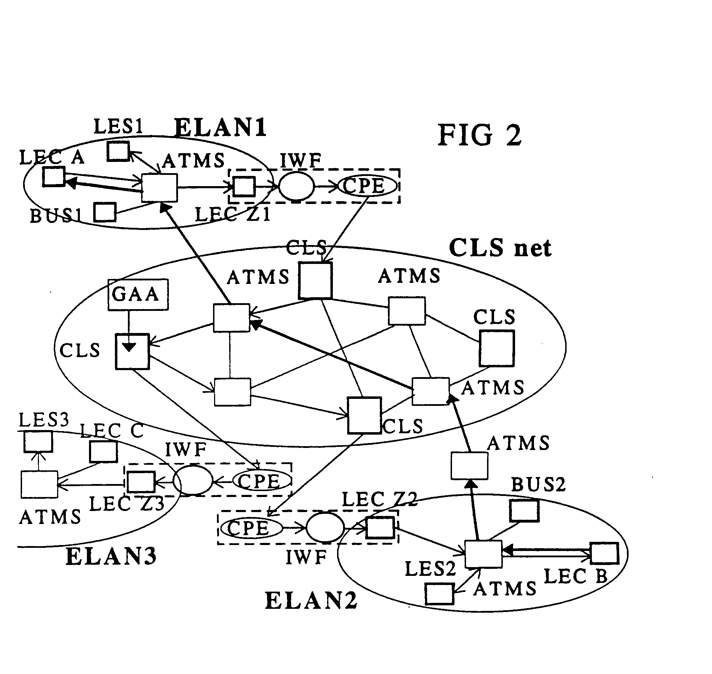

Fig. 2 zeigt anhand derselben Netzkonfiguration wie Fig. 1 die Verbindungsaufbaumethode des zweiten Beispiels. Die Übertragung der Adreßauflösungsanfrage LE_ARP Request wird hierbei bis zu den LAN-Emulation-Servern LES des ELAN2 und des ELAN3 genauso übertragen wie im Beispiel der Fig. 1. Innerhalb des ELAN ELAN2 wird die Adreßauflösungsanfrage dann jedoch noch vom LES über die ATM-Vermittlungseinrichtung ATMS zum Ziel-LEC LEC B übertragen. Die Adreßauflösungsantwort LE_ARP Response entfällt im Beispiel gemäß Fig. 2. Der Verbindungsaufbau einer ATM-Verbindung zwischen dem Ursprungs-LEC LEC A und dem Ziel-LEC LEC B erfolgt ausgehend vom Ziel-LEC LEC B, wie an den Pfeilen der die ATM-Verbindung anzeigenden fetten Vollinien zu erkennen ist.

Genau wie im Beispiel gemäß Fig. 1 wird der Zugangs-LEC LEC Z1, LEC Z2 bzw. LEC Z3 beim LAN-Emulation-Server LES des jeweiligen ELAN ELAN1, ELAN2, ELAN3 als Proxy angemeldet, um unbeantwortbare Adreßauflösungsanfragen LE_ARP Request vom LAN-Emulation-Server LES zu erhalten.

Um einen ATM-Verbindungsaufbau vom Ziel-LEC LEC B zum Ursprungs-LEC LEC A zu veranlassen, muß das Format der Adreßauflösungsanfrage LE_ARP Request geändert werden, so daß eine Signalisierungsnachricht zum Veranlassen eines Verbindungsaufbaus wie z.B. SETUP oder ADD_PARTY mitgesendet werden kann. Die Adreßauflösungsantwort LE_ARP Response wird für Weitverkehrsverbindungen zwischen verschiedenen ELANS gemäß dem Beispiel der Figur 2 nicht benötigt. Eine weitere Änderung in der LAN-Emulation Specification muß vorsehen, daß der LAN-Emulation-Server LES des Ziel-ELANs ELAN2, der die Ziel-MAC-Adresse auflösen kann, die Adreßauflösungsanfrage LE_ARP Request zum Ziel-LEC LEC B überträgt.

Innerhalb der bekannten, einen verbindungslosen Dienst bereitstellenden Netze sind keine Änderungen erforderlich bis auf die bereits im Beispiel der Fig. 1 erwähnte E.164-Gruppenadresse zum Ansprechen aller ELANs.

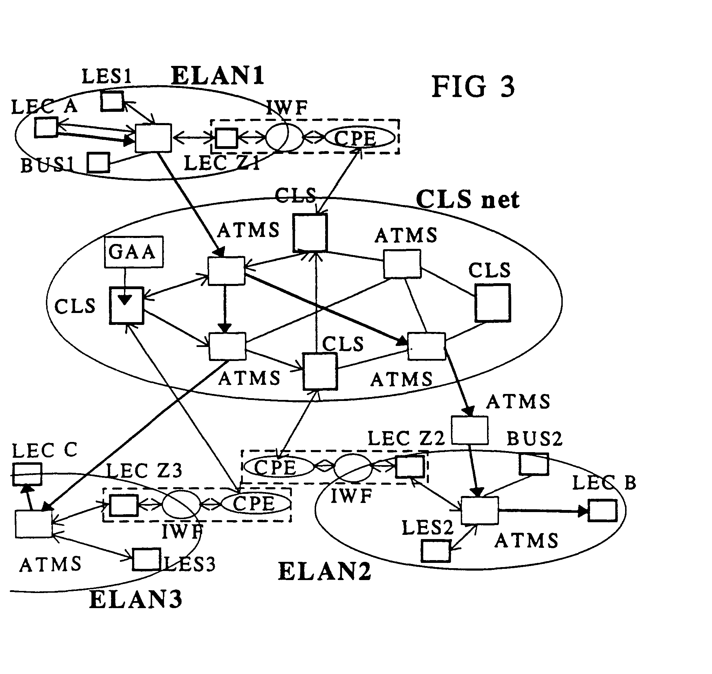

Ein weiteres, anhand von Figur 3 nachstehend näher erläutertes Beispiel eines Verbindungsaufbaus sieht die Adressenauflösung einer Multicast/Broadcast-Ziel-MAC-Adresse durch das CLS-Netz und den Aufbau von Punkt-zu-Punkt bzw. Punkt-zu-Mehrpunkt ATM-Verbindungen vom Sender zu den Empfängern vor.

Der Grundgedanke hierbei ist, durch LE_ARP Request für eine Multicast/Broadcast-MAC-Adresse die ATM-Adressen von mehreren Empfänger-LAN-Emulation-Clienten LEC B, LEC C zu erfahren und Punkt-zu-Punkt oder Punkt-zu-Mehrpunkt ATM-Verbindungen zu diesen LAN-Emulation-Clienten LEC B, LEC C aufzubauen. Die Fig. 3 zeigt dieselbe Netzkonfiguration wie die Fig. 1 und 2. Der Signalfluß der Adreßauflösungsanfrage LE_ARP Request erfolgt in gleicher Weise, wie in Zusammenhang mit Fig. 1 beschrieben. Da jedoch eine Multicast/Broadcast-MAC-Adresse aufzulösen ist, deren Gruppenmitglieder die LAN-Emulation-Clienten LEC B und LEC C in den ELANs ELAN2 und ELAN3 sind, wird nicht nur, wie im anhand von Fig. 1 beschriebenen Beispiel vom LAN-Emulation-Server LES des ELAN2 eine Adreßauflösungsantwort LE_ARP Response zum Ursprungs-LEC LECA im ELAN1 übertragen, sondern auch vom LES des ELAN3. Nach Erhalt aller Adreßauflösungsantworten LE_ARP Response wird vom Ursprungs-LEC LEC A ein Punkt-zu-Mehrpunkt-Verbindungsaufbau zu den LAN-Emulation-Clienten LEC B und LEC C veranlaßt. Der Verbindungsaufbau innerhalb des Netzes ist hierbei durch die fetten Vollinien mit Pfeilspitze in Richtung des Verbindungsaufbaus dargestellt.

Wie in den vorangehenden Beispielen wird auch zur Realisierung des anhand von Fig. 3 beschriebenen Beispiels jeweils der Zugang-LEC LEC Z1, LEC Z2, LEC Z3 als Proxy beim LAN-Emulation-Server LES seines ELAN ELAN1, ELAN2, ELAN3 angemeldet, um alle unbeantwortbaren Adreßauflösungsanfragen vom LAN-Emulation-Server LES zu bekommen.

Im Unterschied zu den beiden vorangegangenen Beispielen wird hier eine Multicast/Broadcast-MAC-Adresse aufgelöst. Die LAN Emulation Specification verbietet das Senden von LE_ARP Requests zur Auflösung von Multicast-MAC-Adressen. Diese Beschränkung muß aufgehoben werden.

Der LE_ARP Request für die Broadcast-MAC-Adresse 48 x "1", also 48 mal die Ziffer "1", liefert die ATM-Adresse vom lokalen Broadcast-and-Unknown-Server BUS. Es muß zusätzlich eine globale Broadcast-MAC-Adresse definiert werden, durch die alle LAN-Emulation-Clienten von allen ELANs, die am CLS-Netz hängen, angesprochen werden können.

Ein viertes Beispiel sieht die Übertragung einer einen Verbindungsaufbau anfordernden Meldung, wie zum Beispiel eine SETUP- oder ADD_PARTY-Signalisierungsnachricht, gemeinsam mit der Adreßauflösungsanfrage LE_ARP Request für eine Multicast/Broadcast-Ziel-MAC-Adresse vor und das unmittelbare Veranlassen eines Punkt-zu-Punkt bzw. Punkt-zu-Mehrpunkt-Verbindungsaufbaus einer ATM-Verbindung zwischen den Empfängern und dem Sender durch die Empfänger.

Diese Methode ist eine Erweiterung der zuvor beschriebenen Methode des dritten Beispiels. Eine Beschleunigung des Verbindungaufbaus zwischen Sender und Empfänger kann erreicht werden, wenn die SETUP bzw. ADD_PARTY Signalisierungsnachricht mit dem LE_ARP Request mitgesendet wird. Dadurch kann jeder Empfänger-LEC gleich nach der Ankunft der Adreßauflösungsanfrage LE_ARP Request den Aufbau einer ATM-Verbindung zum Sender durch Abgeben einer Aufforderungsmeldung an die Signalisierungseinheit veranlassen. Signalisierungseinheit ist hierbei die in der LAN Emulation Specification mit Connection Management bezeichnete Einheit.

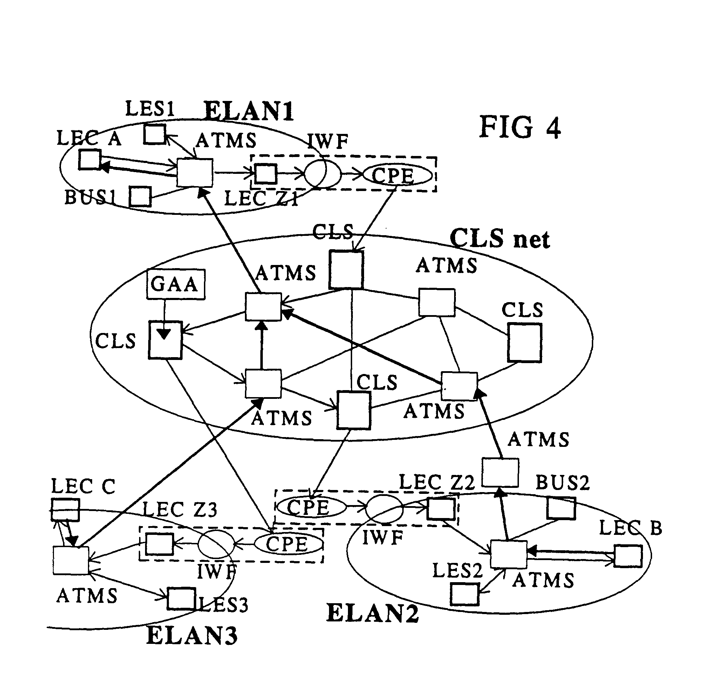

Fig. 4 zeigt anhand derselben Netzkonfiguration wie Fig. 3 die Verbindungsaufbaumethode des vierten Beispiels. Die Übertragung der Adreßauflösungsanfrage LE_ARP Request wird hierbei bis zu den LAN-Emulation-Servern LES des ELAN2 und des ELAN3 genauso übertragen wie im dritten Beispiel gemäß Fig. 3. Innerhalb des ELAN ELAN2 wird die Adreßauflösungsanfrage dann jedoch noch vom LES über die ATM-Vermittlungseinrichtung ATMS zum Ziel-LEC LEC B übertragen und innerhalb des ELAN ELAN3 vom LES über die ATM-Vermittlungseinrichtung ATMS zum Ziel-LEC LEC C. Die Adreßauflösungsantwort LE_ARP Response entfällt genau wie im Beispiel gemäß Fig. 2. Der Verbindungsaufbau einer ATM-Verbindung zwischen dem Ursprungs-LEC LEC A und dem Ziel-LEC LEC B erfolgt ausgehend vom Ziel-LEC LEC B, wie an den Pfeilen der die ATM-Verbindung anzeigenden fetten Vollinien zu erkennen ist. Dasselbe gilt für den Verbindungsaufbau zwischen dem Ursprungs-LEC LEC A und dem Ziel-LEC LEC C.

Genau wie in den vorangegangenen Beispielen wird der Zugangs-LEC LEC Z1, LEC Z2 bzw. LEC Z3 beim LAN-Emulation-Server LES des jeweiligen ELAN ELAN1, ELAN2, ELAN3 als Proxy angemeldet, um unbeantwortbare Adreßauflösungsanfragen LE_ARP Request vom LAN-Emulation-Server LES zu erhalten.

Um einen ATM-Verbindungsaufbau vom Ziel-LEC LEC B zum Ursprungs-LEC LEC A zu veranlassen, muß das Format der Adreßauflösungsanfrage LE_ARP Request geändert werden, so daß eine Signalisierungsnachricht zum Veranlassen eines Verbindungsaufbaus wie z.B. SETUP oder ADD_PARTY mitgesendet werden kann. Die Adreßauflösungsantwort LE_ARP Response wird für Weitverkehrsverbindungen zwischen verschiedenen ELANs gemäß dem Beispiel der Figur 4 nicht benötigt.

Eine weitere Änderung in der LAN-Emulation Specification muß vorsehen, daß jeweils der LAN-Emulation-Server LES jedes Ziel-ELANS ELAN2, ELAN3, der die Ziel-MAC-Adresse auflösen kann, die Adreßauflösungsanfrage LE_ARP Request zum Ziel-LEC LEC B, LEC C überträgt.

In diesem Ausführungsbeispiel wird eine Multicast/ Broadcast-MAC-Adresse aufgelöst. Die LAN Emulation Specification verbietet das Senden von LE_ARP Requests zur Auflösung von Multicast-MAC-Adressen (siehe Punkt 7.1.11 in der Spezifikation). Diese Beschränkung muß aufgehoben werden.

Innerhalb der bekannten, einen verbindungslosen Dienst bereitstellenden Netze sind keine Änderungen erforderlich bis auf die bereits im Beispiel der Fig. 1 erwähnte E.164-Gruppenadresse zum Ansprechen aller ELANs.

Nach dem heutigen Standard für die Signalisierung können keine Punkt-zu-Mehrpunkt ATM-Verbindungen rückwärts aufgebaut werden. Nur Punkt-zu-Punkt ATM-Verbindungen vom Empfänger zum Sender sind möglich. Für die Realisierung dieser Methode muß daher die Signalisierung im ATM-Netz erweitert werden.

Der LE_ARP Request für die Broadcast-MAC-Adresse 48 x "1" liefert die ATM-Adresse vom lokalen Broadcast-and-Unknown-Server. Es muß zusätzlich eine globale Broadcast-MAC-Adresse definiert werden, durch die alle LECs von allen ELANs , die am CLS-Netz hängen, angesprochen werden können. Nachstehend wird allgemein zur Umsetzungsfunktion (Interworking Function) IWF Stellung genommen:

Die IWF realisiert die Verbindung zwischen dem "Zugang LEC" einerseits und dem CLS-Netz andererseits.
Die IWF zur Kopplung von ELANs durch das CLS-Netz behandelt MAC- und E.164-Adressen und ist der Schicht 2 nach OSI-Referenzmodell zuzuordnen. Das heißt die IWF ist eine ELAN-CLS Brücke.

Wenn die IWF auch Routing Funktionen erfüllen soll, kann sie auch Schicht 3 Adressen (z.B. IP, IPX u.s.w.) behandeln. Das ist aber für die Realisierung erfindungsgemäßer Verfahren nicht erforderlich.

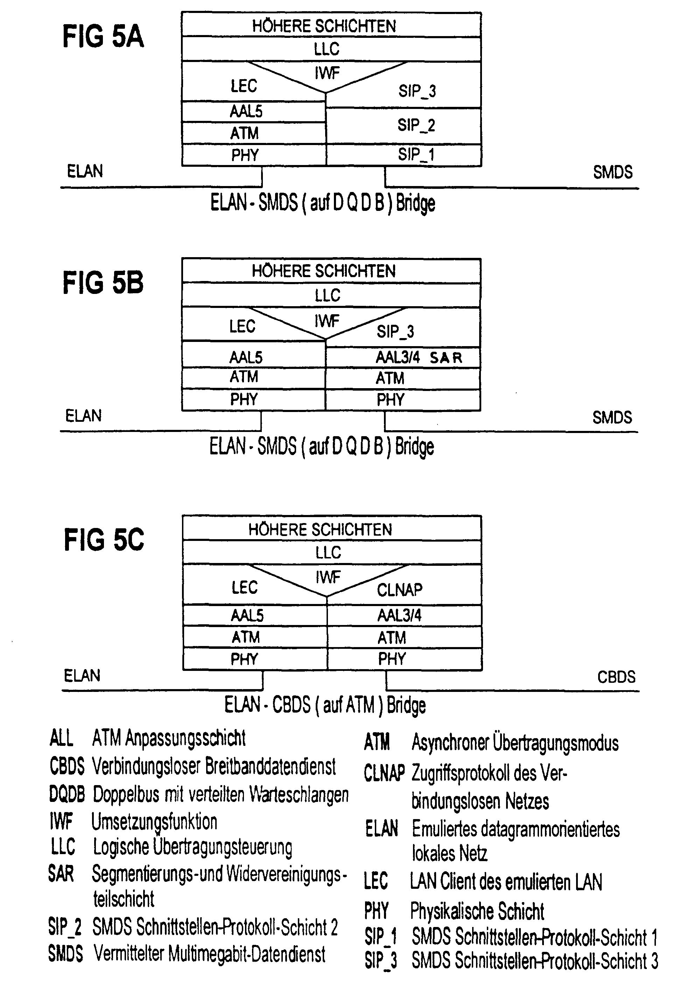

Im Beispiel in Figur 5A, 5B und 5C wird jeweils der Protokollstack für Kopplung von ELANs durch das SMDS-Netz bzw. durch das CBDS-Netz dargestellt. Der SMDS-Dienst wird in dem Beispiel nach Figur 5A mit der DQDB-Technologie und im Beispiel nach Figur 5B mit der ATM-Technologie realisiert. Der CBDS-Dienst wird in dem Beispiel nach Figur 5C mit der ATM-Technologie realisiert.

Die IWF hat die folgenden Aufgaben:
I. Bereitstellung der folgenden Parameter:
   I.1. Empfänger-E.164-Adresse
      Die IWF muß hierzu eine Tabelle mit MAC-Adressen und den entsprechenden E.164-Adressen unterhalten. Die Einträge in der Tabelle werden beispielsweise per Netzmanagement eingestellt, können aber auch anhand der Sender-MAC-Adresse und Sender-E.164-Adresse der angekommenen CLS-Pakete ausgefüllt werden und nach einer bestimmten Zeit gelöscht werden.
   I.2. Sender-E.164-Adresse
      Das ist die E.164-Adresse der IWF.
II. Behandlung der Rahmen entsprechend der Ziel-MAC-Adresse:
   II.1. Unicast/Multicast LE_ARP Requests/Responses, für die kein Eintrag vorhanden ist, werden entweder verworfen, oder mit einer globalen E.164-Broadcast-Gruppenadresse versehen und an das CLS-Netz geleitet.
   II.2. Unicast/Multicast LE_ARP Requests/Responses, für die ein Eintrag vorhanden ist, werden an das CLS-Netz übergeben. II.3. Rahmen mit lokaler Broadcast-MAC-Adresse (Daten und LE_ARP Requests) werden weggeworfen.
   II.4. Unicast/Multicast LE_ARP Requests/Responses mit globaler Broadcast-MAC-Adresse werden mit der globalen E.164-Gruppenadresse versehen und an das CLS-Netz geleitet.

Für die Realisierung der Vorliegenden Erfindung sind nur LE_ARP Requests/Responses relevant.

Ein erstes Realisierungsbeispiel für die Einbindung einer vorstehend beschriebene Umsetzungsfunktion zwischen einem ELAN und einem einen verbindungslosen Dienst bereitstellenden Weitverkehrsnetz für den Fall, daß der verbindungslose Dienst ein "Switched Multi-megabit Data Service" SMDS ist, und daß das Weitverkehrsnetz zur Realisierung dieses Dienstes ein "Distributed Queue Dual Bus" DQDB ist, kann vorsehen, daß weitverkehrsnetzseitig die Protokollschichten
- SMDS-Schnittstellenprotokollschicht 1, SIP_1,
- SMDS-Schnittstellenprotokollschicht 2, SIP_2, und
- SMDS-Schnittstellenprotokollschicht 3, SIP_3, vorgesehen sind und daß die Umsetzungsfunktion weitverkehrsnetzseitig mit der SMDS-Schnittstellenprotokollschicht 3, SIP_3, kommuniziert.
   Hierbei können beispielsweise ELAN-seitig die Protokollschichten
- Physikalische Schicht, PHY,
- Asynchron-Transfer-Modus-Schicht, ATM,
- Asynchron-Transfer-Modus-Anpassungsschicht-5, AAL5, und
- LAN-Emulation-Client-Schicht, LEC,
vorgesehen sein, wobei die Umsetzungsfunktion ELAN-seitig mit der LAN-Emulation-Client-Schicht, LEC, kommuniziert.

In einem anderen Beispiel kann der verbindungslose Dienst ein "Switched Multi-megabit Data Service" (SMDS) sein und das Weitverkehrsnetz zur Realisierung dieses Dienstes ein ATM-Netz, wobei weitverkehrsnetzseitig die Protolollschichten Physikalische Schicht, PHY, Asynchrone-Transfer-Modus-Schicht, ATM, Segmentations-und-Assemblierungs-Subschicht der Asynchron-Transfer-Modus-Anpassungsschicht-3/4, AAL3/4SAR, und SMDS-Schnittstellenprotokollschicht 3, SIP_3, vorgesehen sind und wobei die Umsetzungsfunktion weitverkehrsnetzseitig mit der SMDS-Schnittstellenprotokollschicht 3, SIP_3, kommuniziert.

In einem weiteren Beispiel kann der verbindungslose Dienst ein "Connectionless Broadband Data Service" CBDS sein und das Weitverkehrsnetz zur Realisierung dieses Dienstes ein ATM-Netz, wobei weitverkehrsnetzseitig die Protokollschichten
- Physikalische Schicht, PHY,
- Asynchron-Transfer-Modus-Schicht, ATM,
- Asynchron-Transfer-Modus-Anpassungsschicht-3/4, AAL3/4, und
- Verbindungsloses-Netz-Zugriffs-Protokollschicht, CLNAP,
vorgesehen sind und wobei die Umsetzungsfunktion weitverkehrsnetzseitig mit der Verbindungsloses-Netz-Zugriffs-Protokollschicht, CLNAP, kommuniziert.

Nachstehend werden die Bedeutungen der verwendeten Abkürzungen in Form der Fachbegriffe gemäß den einschlägigen Normen angegeben:
- AAL: ATM Adaptation Layer
- ATM: Asynchronous Transfer Mode
- BUS: Broadcast and Unknown Server
- CBDS: Connectionless Broadband Data Service
- CLNAP: Connectionless Network Access Protocol
- CLNIP: Connectionless Network Interface Protocol
- CLNP: Connectionless Network Protocol
- CLS: Connectionless Service/Server
- CPE: Customer Premises Equipment
- CRC: Cyclic Redundancy Check
- DQDB: Distributed Queue Dual Bus
- DS1: Digital Signal 1
- DS3: Digital Signal 3
- E1: European transmission level 1
- E3: European transmission level 3
- ELAN: Emulated Local Area Network
- ESIG: European SMDS Interest Group
- ETSI: European Telecommunications Standards Institute
- FR: Frame Relay
- GAA: Group Address Agent
- IEEE: Institute of Electrical and Electronics Engineers
- IP: Internet Protocol
- IPX: Internetwork Packet Exchange
- ITU-T: International Telecommunications Union-Telecommunications
- IWF: Interworking Function
- L3_PDU: Level 3 Protocol Data Unit
- LAN: Local Area Network
- LE_ARP: LAN Emulation Address Resolution Protocol
- LEC: LAN Emulation Client
- LECS: LAN Emulation Configuration Server
- LES: LAN Emulation Server

- LLC: Logical Link Control
- MAC: Media Access Control
- OSI: Open Systems Interconnection
- PDU: Protocol Data Unit
- PHY: Physical Layer
- SIG: SMDS Interest Group
- SIP_3: SMDS Interface Protocol Layer 3
- SMDS: Switched Multi-megabit Data Service
- SPX: Sequenced Packet Exchange
- TCP: Transmission Control Protocol
- TP: Transport Protocol
- UBR: Unspecified Bit Rate
- WAN: Wide Area Network

## Patentansprüche

1. Verfahren zum Ermitteln einer Ziel-ATM-Adresse als Antwort auf eine von einem Ursprungs-LAN-Emulation-Client (LEC A) eines ersten ELAN (ELAN 1) abgegebenen Adreßaulösungsanfrage, wenn die aufzulösende Ziel-MAC-Adresse mindestens einem LAN-Emulation-Client (LEC B) eines zweiten ELAN (ELAN 2) zugeordnet ist und das erste sowie das zweite ELAN (ELAN 2) an ein übergeordnetes ATM-Netz und ein einen verbindungslosen Dienst bereitstellendes Weitverkehrsnetz (CLS net) angeschlossen sind, **gekennzeichnet durch**,
- Einkapseln der im ersten ELAN (ELAN 1) als ELAN-Rahmen vorliegenden Adreßauflösungsanfrage in ein Rahmenformat des CLS-Weitverkehrsnetzes (CLS net) mit einer der Ziel-MAC-Adredsse zugeordneten E-164-Adresse im Rahmen-Kopfteil;
- Übergeben dieser eingekapselten Adreßauflösungsanfrage an das CLS-Weitverkehrsnetz (CLS net) und Übertragung zum zweiten ELAN (ELAN 2);
- Entkapseln der eingekapselten Adreßauflösungsanfrage und Übergeben an einen für den Adresstyp zuständigen LAN-Emulation-Server (LES 2) des zweiten ELAN (ELAN 2) im ELAN-Rahmenformat;
- Auflösen der Ziel-MAC-Asdresse in eine zugehörige ATM-Adresse **durch** diesen LAN-Emulation-Server (LES 2) des zweiten ELAN (ELAN 2) und Ausgabe einer Adreßauflösungsantwort;
- Einkapseln dieser Adreßauflösungsantwort in das Rahmenformat des CLS-Weitverkehrsnetzes (CLS net) und Übertragen zum esten Kanal;
- Entkapseln der eingekapselten Adreßauflösungsantwort und Übergeben an den Ursprungs-LAN-Emulation-Clienten (LEC A).

2. Verfahren nach Anspruch 1,
**dadurch gekennzeichnet,**
**daß** die vom LAN-Emulation-Server (LES 2) des zweiten ELAN (ELAN 2) ausgegebene Adreßauflösungsantwort die MAC-Adresse des Ursprungs-LAN-Emulation-Clienten (LEC A) als Ziel-MAC-Adresse im Kopfteil des ELAN-Rahmens enthält und daß das CLS-Weitverkehrsnetz (CLS net) die eingekapselte Adreßauflösungsantwort direkt zum ELAN (ELAN 1) des Ursprungs-LAN-Emulation-Client (LEC A) adressiert.

3. Verfahren nach einem der vorhergenden Ansprüche, wobei das übergeordnete ATM-Netz zusätzlich zu einem verbindungsabhängigen Dienst einen verbindungslosen Dienst bereitstellt.

4. Verfahren nach einem der vorhergehenden Ansprüche,
**dadurch gekennzeichnet,**
**daß** beim Einkapseln der Adreßauflösungsanfrage eine einer Ursprungs-MAC-Adresse des Ursprungs-LAN-Emulation-Clienten (LEC A) zugeordnete E-164-Adresse im Kopfteil des Rahmenformats des CLS-Weitverkehrsnetzes eingegeben wird und daß diese E-164-Adresse beim Entkapseln gepseichert wird.

5. Verfahren nach einem der vorhergehenden Ansprüche,
**dadurch gekennzeichnet,**
**daß** beim Einkapseln der Adreßauflösungsanfrage die der Ziel-MAC-Adresse zugeordnete E-164-Adresse einem Adreß-Speicher entnommen wird, der Ziel-MAC-Adressen und diesen zugeordnete E-164-Adressen enthält.

6. Verfahren nach Anspruch 5
**dadurch gekennzeichnet,**
**daß** eine Adreßauflösungsanfrage verworfen wird, falls der Adreß-Speicher zu ihrer Ziel-MAC-Adresse keine zugeordnete E-164-Adresse enthält.

7. Verfahren nach Anspruch 5,
**dadurch gekennzeichnet,**
**daß** beim Entkapseln einer Adreßauflösungsanfrage eine spezielle, alle an das CLS-Weitverkehrsnetz (CLS net) angeschlossenen ELANs (ELAN 1, ELAN 2, ELAN 3) adressierende E-164-Adresse eingegeben wird, falls der Adreß-Speicher zu ihrer Ziel-MAC-Adresse keine zugeordnete E-164-Adresse enthält.

8. Verfahren nach einem der vorhergehenden Ansprüche,
**dadurch gekennzeichnet,**
**daß** die Rahmenlänge der Adreßauflösungsanfrage festgestellt wird und beim Entkapseln der Adreßauflösungsanfrage im Kopfteil des Rahmenformats des CLS-Weitverkehrsnetzes (CLS net) eingegeben wird.

9. Verfahren nach einem der vorhergehenden Ansprüche,
**dadurch gekennzeichnet,**
**daß** nach dem Entkapseln eines über das CLS-Weitverkehrsnetz (CLS net) empfangenen Rahmen dieser ELAN-Rahmen an das empfangende ELAN angepaßt wird.

10. Verfahren nach Anspruch 9
**dadurch gekennzeichnet,**
**daß** zur Anpassung des empfangen, entkapselten Rahmens eine für das Ursprungs-ELAN (ELAN 1) gültige lokale Clienten-Kennung des Ursprungs-ELAN-Emulation-Clienten (LEC A) geändert wird in eine für das Ziel-ELAN (ELAN 2) gültige lokale Clienten-Kennung des LAN-Emulation-Clienten (LEC B), über den das Ziel-ELAN Zugang (ELAN 2) zum CLS-Weitverkehrsnetz (CLS net) hat.

## Claims

1. Method for determining a destination ATM address in response to an address resolution request output by an originating LAN emulation client (LEC A) of a first ELAN (ELAN 1) when the destination MAC address to be resolved is allocated to at least one LAN emulation client (LEC B) of a second ELAN (ELAN 2) and the first and the second ELAN (ELAN 2) are connected to a higher-level ATM network and a wide-area network providing a connectionless service (CLS net),
**characterized by**
- encapsulation of the address resolution request, present as ELAN frame in the first ELAN (ELAN 1), in a frame format of the CLS wide-area network (CLS net) with an E-164 address, associated with the destination MAC address, in the frame header;
- transferring of this encapsulated address resolution request to the CLS wide-area network (CLS net) and transmitting it to the second ELAN (ELAN 2);
- extraction of the encapsulated address resolution request and transferring it to a LAN emulation server (LES 2), responsible for the address type, of the second ELAN (ELAN 2) in the ELAN frame format;
- resolution of the destination MAC address into an associated ATM address by this LAN emulation server (LES 2) of the second ELAN (ELAN 2) and outputting of an address resolution response;
- encapsulation of this address resolution response in the frame format of the CLS wide-area network (CLS net) and transmission to the first channel;
- extraction of the encapsulated address resolution response and transfer to the originating LAN emulation client (LEC A).

2. Method according to Claim 1,
**characterized in that**
the address resolution response output by the LAN emulation server (LES 2) of the second ELAN (ELAN 2) contains the MAC address of the originating LAN emulation client (LEC A) as destination MAC address in the header of the ELAN frame, and **in that** the CLS wide-area network (CLS net) addresses the encapsulated address resolution response directly to the ELAN (ELAN 1) of the originating LAN emulation client (LEC A).

3. Method according to one of the preceding claims, wherein the higher-level ATM network provides a connectionless service in addition to a connection-oriented service.

4. Method according to one of the preceding claims,
**characterized in that**
during the encapsulation of the address resolution request, an E-164 address associated with a source MAC address of the originating LAN emulation client (LEC A) is input in the header of the frame format of the CLS wide-area network and **in that** this E-164 address is stored during the encapsulation.

5. Method according to one of the preceding claims,
**characterized in that**
during the encapsulation of the address resolution request, the E-164 address associated with the destination MAC address is taken from an address memory which contains destination MAC addresses and associated E-164 addresses.

6. Method according to Claim 5,
**characterized in that** an address resolution request is discarded if the address memory does not contain an associated E-164 address for its destination MAC address.

7. Method according to Claim 5,
**characterized in that**
during the extraction of an address resolution request, a special E-164 address addressing all ELANs (ELAN 1, ELAN 2, ELAN 3) connected to the CLS wide-area network (CLS net) is input if the address memory does not contain an associated E-164 address for its destination MAC address.

8. Method according to one of the preceding claims,
**characterized in that** the frame length of the address resolution request is determined and is input in the header of the frame format of the CLS wide-area network during the extraction of the address resolution request.

9. Method according to one of the preceding claims,
**characterized in that** after the extraction of a frame received via the CLS wide-area network (CLS net), this ELAN frame is matched to the received ELAN.

10. Method according to Claim 9,
**characterized in that**, for matching the received extracted frame, a local client identity, valid for the originating ELAN (ELAN 1), of the originating ELAN emulation client (LEC A) is changed to a local client identity, valid for the destination ELAN (ELAN 2), of the LAN emulation client (LEC B) via which the destination ELAN (ELAN 2) has access to the CLS wide-area network (CLS net).

## Revendications

1. Procédé pour la détermination d'une adresse ATM cible en réponse à une demande de résolution d'adresse émise par un client d'émulation LAN d'origine (LEC A) d'un premier ELAN (ELAN 1) lorsque l'adresse MAC cible à résoudre est associée à au moins un client d'émulation LAN (LEC B) d'un deuxième ELAN (ELAN 2) et si le premier et le deuxième ELAN (ELAN 2) sont raccordés à un réseau ATM d'ordre plus élevé et à un réseau à grand trafic (CLS net) proposant un service sans connexion,
**caractérisé par** les étapes suivantes:
- encapsulation de la demande de résolution d'adresse qui se présente dans le premier ELAN (ELAN 1) sous la forme d'une trame ELAN en un format de trame du réseau CLS à grand trafic (CLS net) avec une adresse E.164 associée à l'adresse MAC cible dans la partie d'en-tête de la trame;
- transmission de cette demande de résolution d'adresse encapsulées au réseau à grand trafic CLS (CLS net) et transmission au deuxième ELAN (ELAN 2);
- désencapsulation de la demande de résolution d'adresse encapsulées et transmission à un serveur d'émulation LAN (LES 2) correspondant au type d'adresse du deuxième ELAN (ELAN 2), au format de trame ELAN;
- résolution de l'adresse MAC cible en une adresse ATM associée, par ce serveur d'émulation LAN (LES 2) du deuxième ELAN (ELAN 2), et émission d'une réponse de résolution d'adresse;
- encapsulation de cette réponse de résolution d'adresse au format de trame du réseau à grand trafic CLS (CLS net) et transmission vers le premier canal;
- désencapsulation de la réponse de résolution d'adresse encapsulées et transmission au client d'émulation LAN d'origine (LEC A).

2. Procédé selon la revendication 1, **caractérisé en ce que** la réponse de résolution d'adresse émise par le serveur d'émulation LAN (LES 2) du deuxième ELAN (ELAN 2) contient comme adresse MAC cible dans la partie d'en-tête de la trame ELAN l'adresse MAC du client d'émulation LAN d'origine (LEC A) et **en ce que** le réseau à grand trafic CLS (CLS net) adresse la demande de résolution d'adresse encapsulées directement à l'ELAN (ELAN 1) du client d'émulation LAN d'origine (LEC A).

3. Procédé selon l'une des revendications précédentes, dans lequel le réseau ATM d'ordre supérieur assure un service sans connexion en plus d'un service dépendant d'une connexion.

4. Procédé selon l'une des revendications précédentes, **caractérisé en ce que** lors de l'encapsulation de la demande de résolution d'adresse, une adresse E.164 associée à l'adresse MAC d'origine du client d'émulation LAN d'origine (LEC A) est introduite dans la partie d'en-tête du format de trame du réseau à grand trafic CLS et **en ce que** cette adresse E.164 est mémorisée lors de l'encapsulation.

5. Procédé selon l'une des revendications précédentes, **caractérisé en ce que** lors de l'encapsulation de la demande de résolution d'adresse, l'adresse E.164 associée à l'adresse MAC cible est prise dans une mémoire d'adresses qui contient les adresses MAC cible et ces adresses E.164 associées.

6. Procédé selon la revendication 5, **caractérisé en ce qu'**une demande de résolution d'adresse est rejetée au cas où la mémoire d'adresses ne contient pas d'adresse E.164 associée à son adresse MAC cible.

7. Procédé selon la revendication 5, **caractérisé en ce que** lors de la désencapsulation d'une demande de résolution d'adresse, une adresse E.164 spéciale qui permet de s'adresser à tous les ELAN (ELAN1, ELAN2, ELAN3) raccordés au réseau à grand trafic CLS (CLS net) est ajoutée au cas où la mémoire d'adresses ne contient pas d'adresse E.164 associée à son adresse MAC cible.

8. Procédé selon l'une des revendications précédentes, **caractérisé en ce que** la longueur de la trame de la demande de résolution d'adresse est déterminée et lors de la désencapsulation de la demande de résolution d'adresse, est introduite dans la partie de tête du format de trame du réseau à grand trafic CLS (CLS net).

9. Procédé selon l'une des revendications précédentes, **caractérisé en ce qu'**après la désencapsulation d'une trame reçue par l'intermédiaire du réseau à grand trafic CLS (CLS net), cette trame ELAN est adaptée à l'ELAN récepteur.

10. Procédé selon la revendication 9, **caractérisé en ce que** pour l'adaptation de la trame désencapsulée reçue, une caractéristique client locale du client d'émulation ELAN d'origine (LEC A) valide pour l'ELAN d'origine (ELAN 1) est modifiée en une caractéristique client locale du client d'émulation LAN (LECB) valide pour l'ELAN cible (ELAN 2) et par l'intermédiaire duquel l'ELAN cible (ELAN 2) a accès au réseau à grand trafic CLS (CLS net).
